# FASCICULE DE BREVET EUROPEEN

(11) **EP 3 576 975 B1**
(45) Date de publication et mention de la délivrance du brevet: **23.12.2020**
(21) Numéro de dépôt: 18704045.6
(22) Date de dépôt: 16.01.2018
(51) Int. Cl.: B60L 3/04, B60S 5/06, H01H 9/08, H01M 2/34, H01R 13/703, H01H 1/58, H01H 9/10

(54) **DISPOSITIF DE CONNEXION ELECTRIQUE AVEC FONCTION DE CONSIGNATION INTEGREE**
ELEKTRISCHE ANSCHLUSSVORRICHTUNG MIT EINGEBAUTER SPERRFUNKTION
ELECTRICAL CONNECTION DEVICE WITH BUILT-IN LOCKOUT FUNCTION

(30) Priorité: 31.01.2017 FR 1750800
(43) Date de publication de la demande: 11.12.2019
(73) Titulaire: Renault S.A.S., 92100 Boulogne-Billancourt (FR); Nissan Motor Co. Ltd, Yokohama-Shi, Kanagawa 221-0023 (JP)
(72) Inventeur: ROUDIER, Sébastien, 91300 Massy (FR); BONNARD, Sylvain, 76000 Rouen (FR); JOVET, Igor, 91290 Arpajon (FR)
(74) Mandataire: Rougemont, Bernard
(86) Numéro de dépôt international: PCT/FR2018/050091
(87) Numéro de publication internationale: WO 2018/142039

(56) Documents cités:
- EP-A1- 0 929 127
- US-A1- 2013 040 502
- US-A1- 2015 280 182

## Description

La présente invention concerne un dispositif de connexion électrique pour véhicule électrique ou véhicule électrique hybride.

De manière générale, un véhicule électrique ou électrique hybride est équipé d'un service de consignation qui consiste à sectionner le circuit électrique de manière à couper le lien électrique entre la batterie et des systèmes alimentés par ladite batterie. Dans ce cas, la batterie est isolée afin d'assurer qu'elle n'alimente plus aucun système.

La consignation de la batterie électrique du véhicule est réalisée par un connecteur dédié à cette fonction. Ce connecteur, souvent de type « cavalier », est disposé entre la batterie et des consommateurs de puissance. On peut ainsi commander la déconnexion entre ces éléments en agissant sur ce connecteur de consignation.

Cependant, ce connecteur a souvent une structure encombrante qui est difficile à implanter sur le véhicule et génère un surcoût d'installation. De plus, le connecteur est parfois implanté dans des endroits difficilement accessibles, ce qui pose un problème d'installation lors d'un remplacement du connecteur en cas de dysfonctionnement.

Un autre type de connecteur de consignation est divulgué par exemple dans le document FR2988901. Ce document décrit dispositif de coupure électrique bipolaire permettant de couper simultanément les deux pôles de la batterie.

Un connecteur de consignation, notamment connu pour l'implémentation de - an anglais - "High Voltage Interlock Loop (HVIL)" est divulgué par le document US2015280182.

Aussi l'invention a pour objectif de proposer un dispositif électrique, permettant une déconnexion entre une source d'énergie et au moins un consommateur, qui a une structure peu encombrante et qui ne complexifie pas le circuit électrique dans lequel le dispositif est intégré.

A cet effet, l'invention propose un dispositif de connexion électrique comprenant
- un connecteur mâle comportant au moins deux fiches mâles ;
- un connecteur femelle comportant au moins deux premières bornes aptes à être reliées à une source d'énergie et au moins deux deuxièmes bornes aptes à être reliées à au moins un consommateur secondaire de puissance.

Selon l'invention, le connecteur mâle est apte à être relié à un consommateur principal de puissance. Par ailleurs, chaque première borne et chaque deuxième borne du connecteur femelle est reliée à un logement coopérant, lorsque le connecteur mâle est branché dans le connecteur femelle, avec au moins une fiche mâle du connecteur mâle de manière à alimenter électriquement le consommateur principal et le consommateur secondaire par la source d'énergie.

Ainsi, lorsque connecteur mâle est branché dans le connecteur femelle, le consommateur principal et le consommateur secondaire sont alimentés simultanément. En revanche, lorsque le connecteur mâle est débranché du connecteur femelle, la source d'énergie est isolée du reste du circuit électrique. Le dispositif de connexion électrique selon l'invention est alors un moyen de coupure électrique efficace permettant d'isoler la batterie d'un véhicule électrique. Ainsi, aucun courant électrique ne circule entre la batterie et les consommateurs, notamment les composants électriques du moteur.

Par ailleurs, ce dispositif de connexion électrique a une structure simple et facile à intégrer dans un circuit électrique. En effet, il suffit de relier les bornes du connecteur femelle à l'élément correspondant : la source d'énergie et le ou les connecteurs.

En outre, ce dispositif propose une interface d'alimentation supplémentaire dans le circuit électrique. Ainsi, de manière avantageuse, le dispositif de connexion de l'invention assure une double fonction d'alimentation et de consignation en une seule structure.

Selon un premier mode de réalisation de l'invention, chaque première borne est insérée dans un premier logement et chaque deuxième borne est insérée dans un deuxième logement. En outre, chaque premier logement est parallèle au deuxième logement correspondant.

Selon le paragraphe précédent, chaque fiche mâle comprend une première branche et une deuxième branche convergeant vers une sortie commune. Chaque première branche et chaque deuxième branche de la fiche mâle sont insérées respectivement dans le premier logement et dans le deuxième logement jusqu'au contact avec la première borne et la deuxième borne lorsque le connecteur mâle est branché dans le connecteur femelle.

Selon une caractéristique particulière selon le premier mode de réalisation, le premier logement et le deuxième logement sont réalisés en un seul tenant.

Selon un deuxième mode de réalisation, chaque première borne est reliée électriquement à un premier logement et chaque deuxième borne est reliée électriquement à un deuxième logement. Particulièrement, chaque premier logement est aligné avec le deuxième logement correspondant de manière à former un passage recevant une fiche mâle.

Selon le paragraphe précédent, chaque première borne comprend une première patte conductrice. De façon similaire, chaque deuxième borne comprend une deuxième patte conductrice.

L'invention concerne également une architecture électrique comprenant une source d'énergie de puissance et au moins un consommateur secondaire. Selon l'invention, cette architecture électrique comprend un dispositif de connexion électrique réalisé selon une des caractéristiques présentées précédemment. Ce dispositif de connexion électrique est disposé entre la source d'énergie et le(s) consommateur(s) secondaire(s).

L'invention concerne également un véhicule électrique ou un véhicule électrique hybride comportant une architecture électrique présentée précédemment.

D'autres caractéristiques et avantages innovants ressortiront de la description ci-après, fournie à titre indicatif et nullement limitatif, en référence aux dessins annexés, dans lesquels :
- La figure 1 représente un dispositif de connexion électrique selon un premier mode de réalisation de l'invention; ledit dispositif comprenant un connecteur femelle et un connecteur mâle ;
- La figure 2 représente le connecteur femelle de la figure 1 sans son enveloppe extérieure ;
- La figure 3 représente un schéma de principe du connecteur femelle de la figure 1 coopérant avec le connecteur mâle correspondant ;
- La figure 4 représente un dispositif de connexion électrique selon un deuxième mode de réalisation de l'invention;
- La figure 5 représente le connecteur femelle et le connecteur mâle de la figure 4 sans leur enveloppe extérieure respective;
- La figure 6 représente un schéma de principe du connecteur femelle de la figure 4 coopérant avec le connecteur mâle correspondant ;
- Les figures 7 et 8 représentent schématiquement une architecture électrique comprenant un dispositif de connexion électrique selon l'invention, respectivement en état de fonctionnement et en état de consignation.

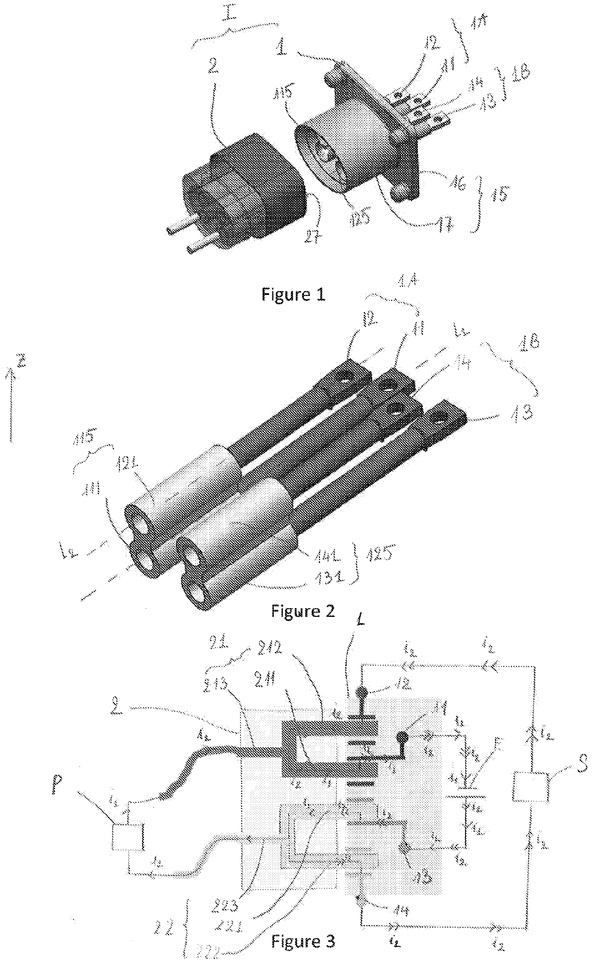

En référence à la figure 1, un dispositif de connexion électrique I selon un premier mode de réalisation de l'invention comprend un connecteur femelle 1 et un connecteur mâle 2.

Le connecteur femelle 1 comprend une enveloppe 15 comportant une plaque de fixation 16 et une jupe 17. L'enveloppe 15 couvre des bornes électriques 11, 12, 13 et 14 et des pièces de connexion intermédiaires 115 et 125. La jupe 17 a une section complémentaire avec celle d'un corps 27 du connecteur mâle 2. Ce dernier est connecté à un consommateur principal de puissance P.

Bien entendu, la section de la jupe 17 et du corps 27 peuvent être elliptiques, triangulaires, carrées ou avoir d'autres formes géométriques convenables.

Sur la figure 2, seules les bornes électriques 11, 12, 13 et 14 et les pièces intermédiaires de connexion 115 et 125 sont illustrées. Selon ce mode de réalisation, il y a quatre bornes électriques qui sont groupées deux par deux pour former un premier sous-ensemble 1A et un deuxième sous-ensemble 1B. Chaque sous-ensemble 1A ou 1B est constitué d'une première borne électrique 11 ou 13 et d'une deuxième borne électrique 12 et 14.

Etant donné de la symétrie du connecteur femelle 1, la description du premier sous-ensemble 1A s'applique de la même manière pour le deuxième sous-ensemble 1B. La première borne électrique 11 est enfichée dans un premier logement 111 tandis que la deuxième borne électrique 12 est enfichée dans un deuxième logement 121. Les premier 111 et deuxième 121 logements sont parallèles entre eux et placés en superposition suivant la verticale, la direction de l'axe Z pointant vers le haut de la figure 2. Par conséquent, les première 11 et deuxième 12 bornes, étant chacun inséré dans le logement correspondant, sont disposées en parallèle entre elles et l'une se trouve au-dessus de l'autre.

Les première 11 et deuxième 12 bornes et les premier 111 et deuxième 121 logements ont des formes complémentaires permettant leur enfichage ou défichage axial, c'est-à-dire selon l'axe longitudinal L₁ et L₂ de chacune de ces bornes. A titre d'exemple, les première 11 et deuxième 12 bornes ont une forme cylindrique et les premier 111 et deuxième 121 logements comportent chacun un alésage cylindrique.

Dans cet exemple, les premier 111 et deuxième 121 logements sont réalisés en une seule pièce, ainsi appelée la première pièce intermédiaire de connexion 115, afin de faciliter la formation des sous-ensembles et le branchement du connecteur mâle dans chaque sous-ensemble. Par exemple, la pièce intermédiaire de connexion 115 est réalisée en un matériau isolant électriquement.

De façon similaire, le premier sous-ensemble 1B du connecteur femelle 1 est constitué d'une première borne électrique 13 engagée dans un premier logement 131 et d'une deuxième borne électrique 14 engagée dans un deuxième logement 141. Les premier 131 et deuxième 141 logements font partie d'une deuxième pièce intermédiaire de connexion 125.

En référence à la figure 3, les première bornes 11 et 13 sont reliées à une source d'énergie E, notamment à une batterie de puissance d'un véhicule électrique tandis que les deuxièmes bornes 121 et 122 sont reliées à un consommateur secondaire S. Les deuxièmes bornes 12 et 14 peuvent être reliées simultanément à plusieurs consommateurs secondaires. Dans ce cas, les consommateurs secondaires sont branchés en parallèle.

Le connecteur mâle 2 coopère avec le connecteur femelle 1 de manière à établir une alimentation électrique non seulement du consommateur principal P par la source d'énergie E mais aussi du consommateur secondaire S par la même source d'énergie E. Le connecteur mâle 2 comprend deux fiches mâles 21 et 22 de connexion qui coopèrent respectivement avec les première 1A et deuxième 1B sous-ensembles du connecteur femelle 1.

La première fiche mâle 21 de connexion comprend une première branche 211 enfichée dans le premier logement 111 et une deuxième branche 212 enfichée dans le deuxième logement 121. Les première 211 et deuxième 212 branches sont en contact respectivement avec la première borne 11 et avec la deuxième borne 12 pour établir une connexion électrique entre ces éléments. Par ailleurs, ces branches 211 et 212 convergent vers une sortie commune 213. Ainsi, la première fiche 21 a une forme de fourche.

La première fiche 21, ainsi engagée dans la première pièce intermédiaire de connexion 115, établit une première connexion électrique entre la source d'énergie et le consommateur principal d'une part et entre la source d'énergie et le consommateur secondaire d'autre part

De façon similaire, la deuxième fiche 22 comprend une première branche 221 engagée dans le premier logement 131 de la deuxième pièce intermédiaire de connexion 125 et une deuxième branche engagée dans le deuxième logement 141 de la même pièce. Les première 221 et deuxième 222 branches sont en contact avec les bornes 13 et 14 correspondantes. Les première 221 et deuxième 222 branches convergent vers une sortie commune 223.

La deuxième fiche 22, coopérant avec la deuxième pièce intermédiaire de connexion 125, établit une deuxième connexion électrique entre la source d'énergie et le consommateur principal d'une part et entre la source d'énergie et le consommateur secondaire d'autre part.

Par conséquent, le branchement du connecteur mâle 2 sur le connecteur femelle 1 permet la circulation d'un courant électrique i₁ entre les deux bornes du consommateur principal et d'un autre courant électrique i₂ entre les deux bornes du consommateur secondaire. En d'autres termes, le connecteur femelle 1, par l'intermédiaire du connecteur mâle 2, alimente en même temps le consommateur principal et le consommateur secondaire en électricité. En revanche, lorsque le connecteur mâle 2 est débranché du connecteur femelle 1, aucun courant ne circule entre les consommateurs et la source d'énergie. La source d'énergie est ainsi isolée des consommateurs, ce qui assure une coupure électrique entre ces éléments. Il y a ainsi une consignation de la source d'énergie lors du débranchement du connecteur mâle 1.

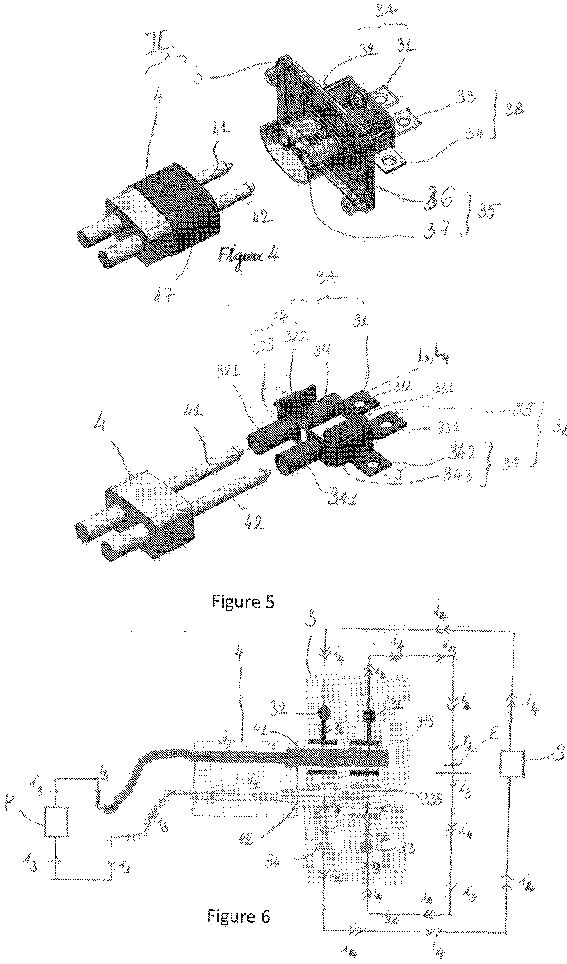

Sur la figure 4, un dispositif de connexion II selon un deuxième mode de réalisation de l'invention comprend un connecteur femelle 3 et un connecteur mâle 4.

Le connecteur femelle 3 comprend une enveloppe 35 comportant une plaque de fixation 36 et une jupe 37. Cette jupe 37 a une section complémentaire avec la section d'un corps 47 d'un connecteur mâle 4. Comme dans le premier mode de réalisation, ce dernier est connecté à un consommateur principal de puissance P.

Bien entendu, la section de la jupe 37 et du corps 47 peuvent être elliptiques, triangulaires, carrées ou avoir d'autres formes géométriques convenables.

Par ailleurs, l'enveloppe 35 couvre des bornes électriques 31, 32, 33 et 34. De la même manière que le premier mode de réalisation, les bornes électriques sont organisées par groupe de deux pour former un premier 3A et un deuxième 3B sous-ensembles. Chaque sous-ensemble 3A ou 3B est constituée d'une première borne 31 ou 33 et d'une deuxième borne 32 ou 34.

En référence à la figure 5, les première 3A et deuxième 3B sous-ensembles sont identiques l'un par rapport à l'autre. Par conséquent, la description de l'un s'applique de la même manière pour l'autre.

En ce qui concerne le premier sous-ensemble 3A, la première borne 31 comprend une première patte conductrice 312 qui est reliée de manière électrique, notamment par soudage, à un premier logement 311. Dans cet exemple, le premier logement 311 est un canal cylindrique creux d'axe longitudinal L₃. La première patte conductrice 312 est située dans le prolongement axial dudit canal.

Pareillement, la deuxième borne 32 comprend une deuxième patte conductrice 322 reliée électriquement à un deuxième logement 321 de forme identique au premier logement 311. Celui-ci est également, dans l'exemple, un canal cylindrique creux d'axe longitudinal L₄. A la différence de la première borne 31, la deuxième patte conductrice 322 est reliée au deuxième logement par l'intermédiaire d'une cale 323 en L. L'axe J de la deuxième patte conductrice est perpendiculaire à l'axe L₄ du deuxième logement 312. A la différence du premier mode de réalisation décrit précédemment, les premier 311 et deuxième 321 logements sont placés en série, c'est-à-dire qu'ils sont alignées l'un par rapport à l'autre de manière à avoir leurs axes respectifs confondus. Par ailleurs, les première 311 et deuxième 321 logements sont espacés l'un de l'autre.

De cette manière, un premier passage 315 est formé pour recevoir une première fiche mâle 41 dont la forme est complémentaire à celle du passage. A titre d'exemple, la fiche mâle est cylindrique et dont le diamètre est sensiblement égal au diamètre des premier 311 et deuxième 321 logements.

De façon similaire, le deuxième sous-ensemble 3B est constitué d'une première borne 33 et d'une deuxième borne 34. Chacune de ces bornes 33 ou 34 comprend une patte conductrice 332 ou 342 reliée de manière électrique à un logement 331 ou 341. Le premier logement 331 est disposé en face du deuxième logement 341 pour former un deuxième passage 335. Ce deuxième passage 335 reçoit une deuxième fiche mâle 42 du connecteur 4.

Le connecteur mâle 4 est de type standard, peu coûteux, et facile à trouver dans les commerces.

Dans un exemple du deuxième mode de réalisation, les bornes et leur logement correspondant peuvent être réalisées en une seule pièce.

Sur la figure 6, les premières bornes 31 et 33 sont reliées à une source d'énergie électrique E tandis que les deuxièmes bornes 32 et 34 sont reliées à un consommateur secondaire S.

Le connecteur mâle 4 est branché dans le connecteur femelle 3. Les première 41 et deuxième 42 fiches mâles sont enfilées respectivement dans les première 3A et deuxième 3B sous-ensembles du connecteur femelle 3. Pour chaque couple, le branchement de la fiche mâle dans le passage correspondant permet d'établir une connexion électrique entre la source d'énergie et le consommateur principal d'une part et entre la source d'énergie et le consommateur secondaire d'autre part.

Ainsi, cela permet une circulation d'un courant électrique i₃ entre les deux bornes du consommateur principal ainsi que la circulation d'un autre courant électrique i₄ entre les deux bornes du consommateur secondaire. Ces courants alimentent à la fois le consommateur principal et le consommateur secondaire. En revanche, lorsque le connecteur mâle 4 est désengagé du connecteur femelle 3, aucune connexion électrique n'existe entre la source d'énergie et les consommateurs. La source électrique est ainsi isolée ou consignée.

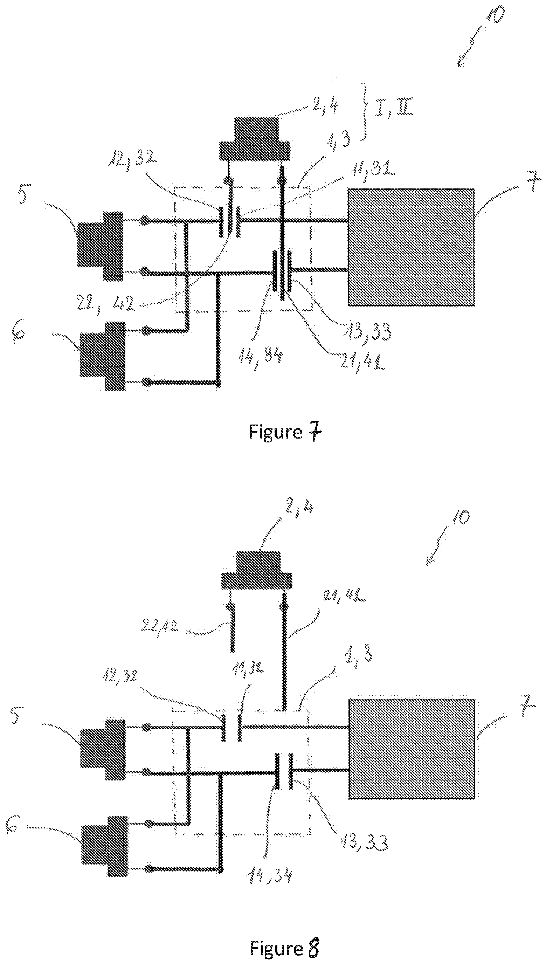

Les figures 7 et 8 représentent un exemple de l'architecture électrique 10 dans laquelle est intégrée le dispositif de connexion I ou II tel que décrit précédemment. L'architecture électrique 10 comprend une source d'énergie 7, deux connecteurs secondaires 5 et 6 et un connecteur femelle 1 ou 3 pour brancher un consommateur principal de puissance. Le connecteur femelle est disposé entre des connecteurs secondaires 5 et 6 et la source d'énergie 10.

Les premières bornes 11, 13 ou 31, 33 sont reliées à la source d'énergie 10 tandis que le deuxième borne 12, 14 ou 32, 34 sont reliées à plusieurs connecteurs secondaires 5, 6, qui sont branchés parallèlement dans l'architecture électrique 10.

Sur la figure 7, le connecteur mâle 2 ou 4 est enfiché dans le connecteur femelle 1 ou 3 par ses fiches mâles 21, 22 ou 41, 42. Le connecteur mâle est relié à un consommateur principal de puissance (non illustré sur les figures 7 et 8). L'architecture électrique 10 est ainsi en état de fonctionnement dans lequel les consommateurs principal et secondaires sont alimentés. Au contraire, lorsque le connecteur mâle 2 ou 4 est débranché du connecteur femelle 1 ou 3 comme représenté à la figure 8, les circuits électriques entre la source d'énergie 10 et les consommateurs secondaires 5, 6 sont interrompus. Il en va de même pour le circuit électrique entre la source d'énergie 10 et le consommateur principal. Une coupure électrique se produit au sein de l'architecture électrique 10, la source d'énergie 7 étant en état de consignation.

## Revendications

1. Dispositif de connexion électrique (I ; II) comprenant
- un connecteur mâle (2 ; 4) comportant au moins deux fiches mâles (21,22 ; 41, 42) ;
- un connecteur femelle (1 ; 3) comportant au moins deux premières bornes (11, 13 ; 31, 33) destinées à être reliées à une source d'énergie (E, 7) et au moins deux deuxièmes bornes (12, 14 ; 32, 34) destinées à être reliées à au moins un consommateur secondaire (S, 5, 6) de puissance ;
le dispositif de connexion électrique (I ; II) étant **caractérisé en ce que**
- le connecteur mâle (2 ; 4) est destiné à être relié à un consommateur principal (P) de puissance ;
- le connecteur femelle (1 ; 3) comprend un premier sous-ensemble (1A ; 3A) et un deuxième sous-ensemble (1B ; 3B) ; chaque sous-ensemble (1A, 1B ; 3A, 3B) étant constitué d'une première borne (11, 13 ; 31, 33) et d'une deuxième borne (12, 14 ; 32, 34) ;
- dans chaque sous-ensemble (1A, 1B ; 3A, 3B), la première borne (11, 13 ; 31, 33) et la deuxième borne (12, 14 ; 32 ; 34) du connecteur femelle est reliée à un logement correspondant (111, 121, 131, 141 ; 311, 321, 331, 341) ;
- lorsque le connecteur mâle (2 ; 4) est branché dans le connecteur femelle (1 ; 3), dans chaque sous-ensemble (1A, 1B ; 3A, 3B), une fiche mâle (21, 22 ; 41, 42) du connecteur mâle (2 ; 4) établit une connexion électrique entre la première borne (11, 13 ; 31, 33) et la deuxième borne (12, 14 ; 32, 34).

2. Dispositif de connexion électrique (I) selon la revendication 1 **caractérisé en ce que** dans chaque sous-ensemble (1A, 1B) :
- la première borne (11, 13) est insérée dans un premier logement (111, 131) et la deuxième borne (12, 14) est insérée dans un deuxième logement (121, 141);
- le premier logement (111, 131) est parallèle au deuxième logement (121, 141) ; et
- le premier logement (111, 131) et le deuxième logement (121, 141) sont réalisés en une seule pièce, dite pièce intermédiaire de connexion (115, 125), ladite pièce intermédiaire de connexion (121, 141) étant réalisée en un matériau isolant électriquement.

3. Dispositif de connexion électrique (I) selon la revendication 2 **caractérisé en ce que**
- chaque fiche mâle (21, 22), ayant la forme d'une fourche, comprend une première branche (211, 221) et une deuxième branche (212, 222) convergeant vers une sortie commune (213, 223);
chaque première branche (211, 212) et chaque deuxième branche (221, 222) de la fiche mâle (21, 22) sont insérées respectivement dans le premier logement (111, 131) et le deuxième logement (121, 141) jusqu'au contact avec la première borne (11, 13) et la deuxième borne (12, 14) lorsque le connecteur mâle (2) est branché dans le connecteur femelle (1).

4. Dispositif de connexion électrique (II) selon la revendication 1 **caractérisé en ce que** dans chaque sous-ensemble (3A, 3B),
- la première borne (31, 33) est reliée électriquement à un premier logement conducteur (311, 331) et la deuxième borne (32, 34) est reliée électriquement à un deuxième logement conducteur (321, 341); et
- le premier logement (311, 331) est aligné avec le deuxième logement (321, 341) de manière à former un passage (315, 335) recevant une fiche mâle (41, 42).

5. Dispositif de connexion électrique (II) selon la revendication 4 **caractérisé en ce que** dans chaque sous-ensemble (3A, 3B),
- la première borne (31, 33) comprend une première patte conductrice (312, 332); et
- la deuxième borne (32, 34) comprend une deuxième patte conductrice (322, 342).

6. Architecture électrique (10) comprenant une source d'énergie (7) de puissance et au moins un consommateur secondaire (5, 6) **caractérisée en ce qu'**elle comprend au moins dispositif de connexion électrique (I, II) selon l'une des revendications précédentes disposé entre la source d'énergie de puissance (7) et le consommateur secondaire (5,6).

7. Véhicule électrique ou véhicule électrique hybride **caractérisé en ce qu'**il comprend une architecture électrique (10) selon la revendication 6.

## Patentansprüche

1. Elektrische Verbindungseinheit (I; II), die enthält:
- einen Steckverbinder (2; 4), der mindestens zwei Stecker (21, 22; 41, 42) aufweist,
- einen Buchsenverbinder (1; 3), der mindestens zwei erste Anschlüsse (11, 13; 31, 33), die dazu bestimmt sind, mit einer Energiequelle (E, 7) verbunden zu werden, und mindestens zwei zweite Anschlüsse (12, 14; 32, 34) aufweist, die dazu bestimmt sind, mit mindestens einem sekundären Leistungsverbraucher (S, 5, 6) verbunden zu werden;
wobei die elektrische Verbindungseinheit (I; II) **dadurch gekennzeichnet ist, dass**
- der Steckverbinder (2; 4) dazu bestimmt ist, mit einem Hauptleistungsverbraucher (P) verbunden zu werden;
- der Buchsenverbinder (1; 3) eine erste Teileinheit (1A; 3A) und eine zweite Teileinheit (1B; 3B) enthält, wobei jede Teileinheit (1A, 1B; 3A, 3B) aus einem ersten Anschluss (11, 13; 31, 33) und einem zweiten Anschluss (12, 14; 32, 34) besteht;
- in jeder Teileinheit (1A, 1B; 3A, 3B) der erste Anschluss (11, 13; 31, 33) und der zweite Anschluss (12, 14; 32; 34) des Buchsenverbinders mit einer entsprechenden Aufnahme (111, 121, 131, 141; 311, 321, 331, 341) verbunden ist;
- wenn der Steckverbinder (2; 4) in jeder Teileinheit (1A, 1B; 3A, 3B) in den Buchsenverbinder (1; 3) eingesteckt ist, ein Stecker (21, 22; 41, 42) des Steckverbinders (2; 4) eine elektrische Verbindung zwischen dem ersten Anschluss (11, 13; 31, 33) und dem zweiten Anschluss (12, 14; 32, 34) aufbaut.

2. Elektrische Verbindungseinheit (I) nach Anspruch 1, **dadurch gekennzeichnet, dass** in jeder Teileinheit (1A, 1B) :
- der erste Anschluss (11, 13) in eine erste Aufnahme (111, 131) eingeführt und der zweite Anschluss (12, 14) in eine zweite Aufnahme (121, 141) eingeführt wird;
- die erste Aufnahme (111, 131) parallel zur zweiten Aufnahme (121, 141) ist; und
- die erste Aufnahme (111, 131) und die zweite Aufnahme (121, 141) aus einem einzigen Stück hergestellt sind, Zwischenverbindungsbauteil (115, 125) genannt, wobei das Zwischenverbindungsbauteil (121, 141) aus einem elektrisch isolierenden Material hergestellt ist.

3. Elektrische Verbindungseinheit (I) nach Anspruch 2, **dadurch gekennzeichnet, dass**:
- jeder Stecker (21, 22) in Form einer Gabel einen ersten Schenkel (211, 221) und einen zweiten Schenkel (212, 222) enthält, die zu einem gemeinsamen Ausgang (213, 223) hin konvergieren;
jeder erste Schenkel (211, 212) und jeder zweite Schenkel (221, 222) des Steckers (21, 22) in die erste Aufnahme (111, 131) bzw. die zweite Aufnahme (121, 141) bis zum Kontakt mit dem ersten Anschluss (11, 13) und dem zweiten Anschluss (12, 14) eingeführt werden, wenn der Steckverbinder (2) in den Buchsenverbinder (1) eingesteckt wird.

4. Elektrische Verbindungseinheit (II) nach Anspruch 1, **dadurch gekennzeichnet, dass** in jeder Teileinheit (3A, 3B) :
- der erste Anschluss (31, 33) elektrisch mit einer ersten leitenden Aufnahme (311, 331) verbunden ist und der zweite Anschluss (32, 34) elektrisch mit einer zweiten leitenden Aufnahme (321, 341) verbunden ist; und
- die erste Aufnahme (311, 331) mit der zweiten Aufnahme (321, 341) so ausgerichtet ist, dass sie einen Durchgang (315, 335) bilden, der einen Stecker (41, 42) aufnimmt.

5. Elektrische Verbindungseinheit (II) nach Anspruch 4, **dadurch gekennzeichnet, dass** in jeder Teileinheit (3A, 3B)
- der erste Anschluss (31, 33) eine erste leitende Lasche (312, 332) enthält; und
- der zweite Anschluss (32, 34) eine zweite leitende Lasche (322, 342) enthält.

6. Elektrische Architektur (10), die eine Leistungsenergiequelle (7) und mindestens einen sekundären Verbraucher (5, 6) enthält, **dadurch gekennzeichnet, dass** sie mindestens eine elektrische Verbindungseinheit (I, II) nach einem der vorhergehenden Ansprüche enthält, die zwischen der Leistungsenergiequelle (7) und dem sekundären Verbraucher (5, 6) angeordnet ist.

7. Elektrofahrzeug oder Hybridfahrzeug, **dadurch gekennzeichnet, dass** es eine elektrische Architektur (10) nach Anspruch 6 enthält.

## Claims

1. Electrical connection device (I; II) comprising
- a male connector (2; 4) comprising at least two male plugs (21, 22; 41, 42);
- a female connector (1; 3) comprising at least two first terminals (11, 13; 31, 33) intended to be linked to an energy source (E, 7) and at least two second terminals (12, 14; 32, 34) intended to be linked to at least one secondary power consumer (S, 5, 6);
the electrical connection device (I; II) being **characterized in that**
- the male connector (2; 4) is intended to be linked to a main power consumer (P);
- the female connector (1; 3) comprises a first subassembly (1A; 3A) and a second subassembly (1B; 3B); each subassembly (1A, 1B; 3A, 3B) being composed of a first terminal (11, 13; 31, 33) and a second terminal (12, 14; 32, 34);
- in each subassembly (1A, 1B; 3A, 3B), the first terminal (11, 13; 31, 33) and the second terminal (12, 14; 32, 34) of the female connector is linked to a corresponding housing (111, 121, 131, 141; 311, 321, 331, 341) ;
- when the male connector (2; 4) is connected in the female connector (1; 3), in each subassembly (1A, 1B; 3A, 3B), a male plug (21, 22; 41, 42) of the male connector (2; 4) establishes an electrical connection between the first terminal (11, 13; 31, 33) and the second terminal (12, 14; 32, 34).

2. Electrical connection device (I) according to Claim 1, **characterized in that**, in each subassembly (1A, 1B):
- the first terminal (11, 13) is inserted into a first housing (111, 131) and the second terminal (12, 14) is inserted into a second housing (121, 141);
- the first housing (111, 131) is parallel to the second housing (121, 141); and
- the first housing (111, 131) and the second housing (121, 141) are produced in a single piece, called intermediate connection piece (115, 125), said intermediate connection piece (121, 141) being produced in an electrically insulating material.

3. Electrical connection device (I) according to Claim 2, **characterized in that**
- each male plug (21, 22), having the form of a fork, comprises a first branch (211, 221) and a second branch (212, 222) converging towards a common output (213, 223);
each first branch (211, 212) and each second branch (221, 222) of the male plug (21, 22) is inserted respectively into the first housing (111, 131) and the second housing (121, 141) until contact is made with the first terminal (11, 13) and the second terminal (12, 14) when the male connector (2) is connected in the female connector (1).

4. Electrical connection device (II) according to Claim 1, **characterized in that**, in each subassembly (3A, 3B),
- the first terminal (31, 33) is linked electrically to a first conductive housing (311, 331) and the second terminal (32, 34) is linked electrically to a second conductive housing (321, 341); and
- the first housing (311, 331) is aligned with the second housing (321, 341) so as to form a passage (315, 335) receiving a male plug (41, 42).

5. Electrical connection device (II) according to Claim 4, **characterized in that**, in each subassembly (3A, 3B),
- the first terminal (31, 33) comprises a first conductive tab (312, 332); and
- the second terminal (32, 34) comprises a second conductive tab (322, 342).

6. Electrical architecture (10) comprising a power energy source (7) and at least one secondary consumer (5, 6), **characterized in that** it comprises at least one electrical connection device (I, II) according to one of the preceding claims disposed between the power energy source (7) and the secondary consumer (5, 6).

7. Electric vehicle or hybrid electric vehicle, **characterized in that** it comprises an electrical architecture (10) according to Claim 6.
